# EUROPEAN PATENT APPLICATION

(11) **EP 4 597 722 A2**
(43) Date of publication of application: **06.08.2025**
(21) Application number: 25151193.7
(22) Date of filing: 10.01.2025
(51) Int. Cl.: H01M 50/417, H01M 50/42, H01M 50/446, H01M 50/451, H01M 50/457, H01M 50/46, H01M 10/04

(54) **SEPARATOR AND ELECTRODE ASSEMBLY**

(30) Priority: 11.01.2024 KR 20240004697; 23.10.2024 KR 20240145717
(71) Applicant: SK On Co., Ltd., Seoul 03161 (KR)
(72) Inventor: JOO, Dong Jin, Daejeon 34124 (KR); GOO, Soo Im, Daejeon 34124 (KR); KIM, Whee Sung, Daejeon 34124 (KR)
(74) Representative: Stolmár & Partner Patentanwälte PartG mbB

(57) **Abstract**

The present disclosure relates to a separator for secondary batteries, the separator including: a porous substrate layer; and a fusion layer laminated to a preset fusion thickness on at least one area of one or both surfaces of the porous substrate layer and including polymer particles having a glass transition temperature higher than or equal to 30 °C or lower than or equal to 90 °C, an electrode assembly including the same, and a method of manufacturing the electrode assembly.

## Description

### BACKGROUND OF THE INVENTION

### 1. Field

The present disclosure relates to a separator for a secondary battery, an electrode assembly including the same, and a method for manufacturing the electrode assembly. More specifically, the present disclosure relates to a separator for a secondary battery having improved heat resistance and fusion properties, an electrode assembly including the same, and a method for manufacturing the electrode assembly.

### 2. Description of the Related Art

An electrode assembly included inside a secondary battery may include a cathode plate, an anode plate, and a separator provided between the cathode plate and the anode plate. In line with the recent trend toward higher capacity and larger area of secondary batteries, the size and number of the cathode plate and the anode plate forming one electrode assembly are also increasing.

However, as the size and number of the cathode plate and the anode plate increase, there is a problem in that the cathode plate and the anode plate do not tightly adhere to each other and a lifted part occurs during long-term charging and discharging, or the secondary battery expands and becomes deformed (swelling phenomenon), which reduces the lifetime of the secondary battery.

In addition, due to the increase in the size and number of the cathode plate and the anode plate, it became necessary to increase the assembly speed of the electrode assembly. However, when the assembly speed of the electrode assembly is increased, a problem may occur in which the cathode plate and the anode plate are misaligned due to vibration during assembly.

To solve this, it is necessary to suppress the shaking or deformation of the anode and cathode by heat-fusing a separator. However, depending on the conditions for heat-fusing a separator, there is a problem in which the performance of the separator deteriorates or a long time is required to manufacture an electrode assembly.

### SUMMARY OF THE INVENTION

According to one aspect of the present disclosure, a technical problem is to prevent misalignment of a cathode plate and an anode plate during assembly of an electrode assembly.

According to another aspect of the present disclosure, a technical problem is to prevent misalignment of a cathode plate and an anode plate without reducing the assembly speed of an electrode assembly.

According to still another aspect of the present disclosure, a technical problem is to prevent misalignment of a plurality of cathode plates and anode plates even when a plurality of cathode plates and a plurality of anode plates having a large area are laminated.

According to yet another aspect of the present disclosure, a technical problem is to prevent a blocking phenomenon that may occur in a separator provided in a roll shape while facilitating heat fusion of the separator.

According to yet another aspect of the present disclosure, a technical problem is to prevent deterioration of the performance of a separator even after undergoing a heat fusion step.

According to yet another aspect of the present disclosure, a technical problem is to improve the production efficiency of a process for assembling an electrode assembly.

Meanwhile, a separator for a secondary battery and a battery call including an electrode assembly including the separator according to the present disclosure can be widely applied in the field of electric vehicles, battery charging stations, energy storage system (ESS), and green technology, such photovoltaics and wind power generation using batteries. In addition, a separator for a secondary battery and a battery call including an electrode assembly including the separator according to the present disclosure can be used in eco-friendly mobilities including electric vehicles and hybrid vehicles to prevent air pollution and climate change by suppressing greenhouse gas emissions.

To solve the above-described technical problems, a separator for secondary batteries according to the present disclosure may include: a porous substrate layer; and a fusion layer laminated to a preset fusion thickness on at least one area of one or both surfaces of the porous substrate layer and including polymer particles having a glass transition temperature higher than or equal to 30 °C or lower than or equal to 90 °C.

The size of the polymer particles may be larger than or equal to 0.1 µm and smaller than or equal to 0.7 µm.

The polymer particles may be any one or a combination of acrylate and a copolymer of the acrylate.

The fusion thickness may be less than or equal to 1 µm.

The shape of the polymer particles may be amorphous.

Meanwhile, the separator for secondary batteries according to the present disclosure may further include a heat-resistant layer laminated to a preset heat-resistant thickness on at least one other area of one surface or both surfaces of the porous substrate layer.

The heat-resistant layer may be laminated between the fusion layer and the porous substrate layer in an area region where the heat-resistant layer and the fusion layer overlap.

The heat-resistant layer may include 60% to 99% by weight of inorganic particles and 40% to 1% by weight of a polymer binder based on 100% by weight of a total composition.

The size of the inorganic particles may be larger than or equal to 0.1 µm and smaller than or equal to 2.0 µm.

Meanwhile, an electrode assembly according to the present disclosure may include: a first electrode; a second electrode alternately laminated with the first electrode along a preset laminating direction and having a different electrical polarity from the first electrode; and a separator positioned between the first electrode and the second electrode along the laminating direction and at the outermost sides of the first electrode and the second electrode and including a first part, which overlaps the first electrode or the second electrode along the laminating direction, and a second part, which is formed on both sides of the first part, wherein the second part includes a fusion layer including polymer particles having a glass transition temperature higher than or equal to 30 °C and lower than or equal to 90 °C, and at least a part of the second part is joined to each other by heating the fusion layer.

Meanwhile, the difference between the positions of the first electrode and the second electrode before heat fusion of the fusion layer and the positions of the first electrode and the second electrode after the fusion layer is joined may be within a preset tolerance range.

The size of the polymer particles is larger than or equal to 0.1 µm and smaller than or equal to 0.7 µm.

The polymer particles may be any one or a combination of acrylate and a copolymer of the acrylate.

The fusion thickness, which is a thickness to which the fusion layer is laminated, is less than or equal to 1 µm.

The first part may be provided in a plural number, and the plurality of first parts may be positioned to be spaced apart from each other.

The first part and the second part may include a porous substrate layer; and a heat-resistant layer laminated on one surface or both surfaces of the porous substrate layer to a preset heat-resistant thickness.

The heat-resistant layer may be laminated between the fusion layer and the porous substrate layer in an area where the heat-resistant layer and the fusion layer overlap.

Meanwhile, the separator may be folded in a zigzag shape, and the first electrode and the second electrode may be arranged alternately between each space of the separator folded in a zigzag shape.

Meanwhile, a method for manufacturing an electrode assembly according to the present disclosure may include: a step of alternately disposing a first electrode and a second electrode having a different electrical polarity from the first electrode between each space of a separator along a preset laminating direction; and a step of heating and joining a second part, which is one part of a separator located on both sides of a first part, which is another part of the separator that overlaps the first electrode and the second electrode along the laminating direction, wherein, in the step of heating and joining the second part, a fusion layer laminated on the second part and including polymer particles having a glass transition temperature higher than or equal to 30 °C or and lower than or equal to 90 °C is joined each other to at least a part of the second part through heating at the glass transition temperature.

According to one embodiment of the present disclosure, misalignment of a cathode plate and an anode plate can be prevented during assembly of an electrode assembly.

According to another embodiment of the present disclosure, misalignment of a cathode plate and an anode plate can be prevented without reducing the assembly speed of an electrode assembly.

According to still another embodiment of the present disclosure, even when a plurality of cathode plates and a plurality of anode plates having large areas are laminated, misalignment of the plurality of cathode plates and the plurality of anode plates can be prevented

According to yet another embodiment of the present disclosure, blocking phenomenon that may occur in a separator provided in a roll shape can be prevented.

According to yet another embodiment of the present disclosure, the performance of a separator can be maintained even after a heat fusion step.

According to yet another embodiment of the present disclosure, the production efficiency of a process of assembling an electrode assembly can be improved.

### BRIEF DESCRIPTION OF THE DRAWINGS

FIG. 1 shows one example of a battery cell including an electrode assembly according to the present disclosure.
FIG. 2 shows a schematic illustration of one cross-section of an electrode assembly before pressurizing and heating an example of a separator according to the present disclosure.
FIG. 3 shows a schematic illustration of one cross-section of an electrode assembly after heating one example of a separator according to the present disclosure.
FIG. 4 shows a schematic illustration of a cross-section of an electrode assembly before heating another example of a separator according to the present disclosure.
FIG. 5 shows a schematic illustration of a cross-section of an electrode assembly after heating another example of a separator according to the present disclosure.
FIG. 6 shows one example of a separator according to the present disclosure.
FIG. 7 shows one cross-section of a separator according to the present disclosure.
FIG. 8 shows one example of a jig or a pressurizing and heating device for manufacturing an electrode assembly according to the present disclosure.

### DETAILED DESCRIPTION

Hereinafter, preferred embodiments of the present disclosure will be described in detail with reference to the attached drawings. The configuration or control method of the apparatus described below is only for explaining the embodiments of the present disclosure and is not intended to limit the scope of the present disclosure, and the same reference numerals used throughout the specification indicate the same components.

Specific terms used in the present specification are merely for convenience of explanation and are not used to limit the illustrated embodiments.

For example, expressions such as "same" and "is the same" not only indicate a strictly identical state, but also indicate a state in which there is a difference in tolerance or the degree to which the same function is obtained.

For example, expressions representing relative or absolute arrangement such as "in a certain direction," "along a certain direction," "side by side," "perpendicularly," "at the center," "concentric," or "coaxial," not only strictly represent the arrangement, but also represent the state of relative displacement with a tolerance, or an angle or distance at which the same function is obtained.

The use of terms such as 'first, second, and third' in front of the components mentioned below is only to avoid confusion about the components to which they are referred and is irrelevant to the order, importance, or master-slave relationship between the components, etc. For example, an invention that includes only a second component without a first component may also be implemented.

As used in this specification, singular expressions include plural expressions unless the context clearly dictates otherwise.

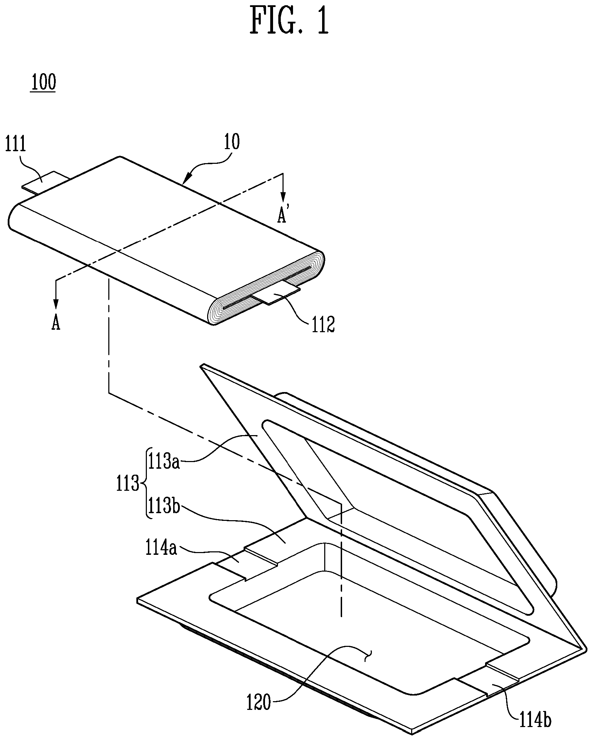

FIG. 1 shows one example of a battery cell including an electrode assembly according to the present disclosure.

Referring to FIG. 1, a battery cell 100 according to the present disclosure may include an electrode assembly 10, a case 113 accommodating the electrode assembly 10 therein, and a lead tab portion 111 and 112 electrically connected to the electrode assembly 10 and protruding outward from the case 113.

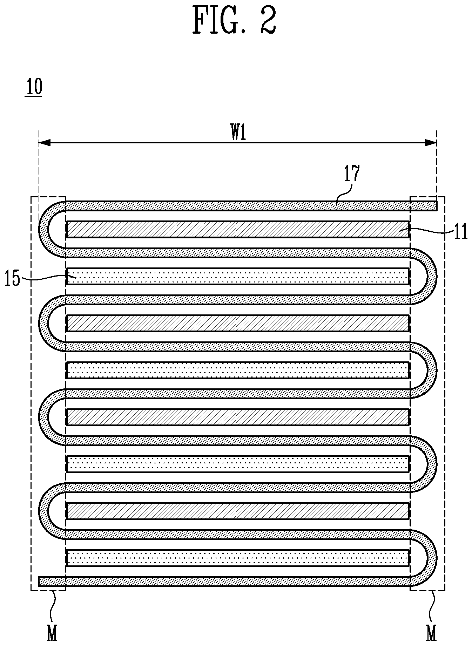

The electrode assembly 10 may include a first electrode 11 (see FIG. 2), a second electrode 15 (see FIG. 2) having a different electrical polarity from the first electrode, and a separator 17 (see FIG. 2) for electrically separating the first electrode 11 and the second electrode 15 from the outside or other electrodes.

The first electrode 11 may be one of a cathode or an anode, and the second electrode 15 may be the other one of a cathode or an anode.

The case 113 may form an accommodating space 120 accommodating the electrode assembly 10. The accommodating space 120 may accommodate the electrode assembly 10 and an electrolyte (not shown). The case 113 may be formed by folding a single sheet-shaped exterior material to form the accommodating space 120.

Specifically, the case 113 may include a first exterior material 113a forming a first accommodating space and a second exterior material 113b forming a second accommodating space positioned to correspond to the first accommodating space. The first exterior material 113a and the second exterior material 113b may be formed integrally. When the first exterior material 113a and the second exterior material 113b are folded toward each other, the openings of the first accommodating space and the second accommodating space may be combined as one to form one accommodating space 120.

Meanwhile, the first exterior material 113a or the second exterior material 113b may be joined to each other and sealed to prevent leakage of an electrolyte accommodated therein. The first exterior material 113a may include a first peripheral portion formed around the perimeter of the first accommodation space, and the second exterior material 113b may include a second peripheral portion formed around the perimeter of the second accommodation space. In addition, the first peripheral portion and the second peripheral portion may be joined to each other by sealing.

Meanwhile, the battery cell 100 may include a lead tab portion 111 and 112 for electrically connecting the electrode assembly 10 and the outside. Inevitably, the lead tab portion 111 and 112 must protrude outside the case 113, and considering this, the first exterior material 113a or the second exterior material 113b may further include a lead recessed groove 114a and 114b corresponding to the shape of the lead tab portion 111 and 112. By inserting at least a part of the lead tab portion 111 and 112 into the lead recessed groove 114a and 114b, the first exterior material 113a and the second exterior material 113b may be coupled to each other without significant deformation due to the lead tab portion 111 and 112.

FIG. 1 illustrates an electrode assembly 10 accommodated in a pouch-type battery cell 100 as an example, but the electrode assembly 10 according to the present disclosure may be applied not only to a pouch-type battery cell but also to prismatic and cylindrical battery cells.

FIG. 2 shows a schematic illustration of one cross-section of an electrode assembly before pressurizing and heating an example of a separator according to the present disclosure.

More specifically, FIG. 2 illustrates a cross-section of the electrode assembly 10 cut along the A-A' direction in FIG. 1. Referring to FIG. 2, the electrode assembly 10 may include a first electrode 11, a second electrode 15, and a separator 17.

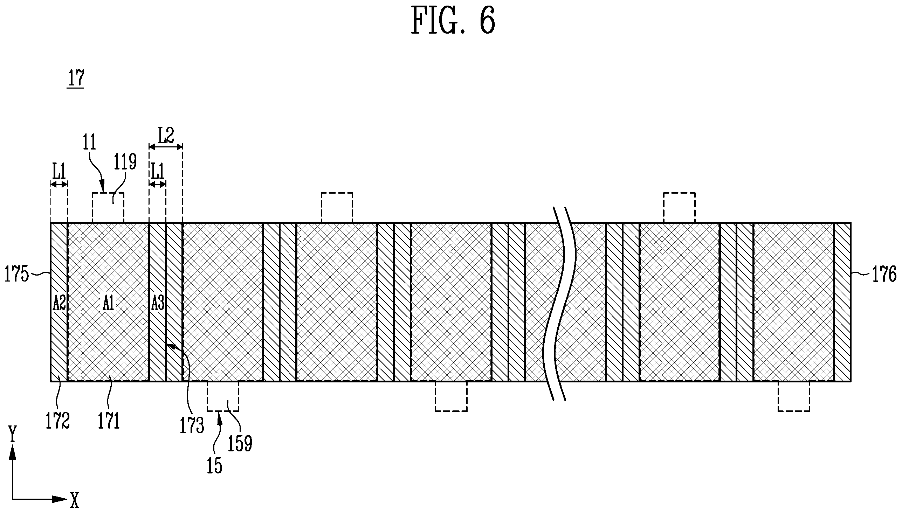

The first electrode 11 and the second electrode 15 may be formed by laminating a cathode active material or an anode active material on an electrode plate made of a metallic material. The electrode plate may include a coating portion where the cathode active material or the anode active material is laminated, and a non-coating portion 119 and 159 (see FIG. 6) protruding from one side of the coating portion.

The first electrode 11 and the second electrode 15 may be alternately laminated along a preset laminating direction.

The electrode assembly 10 may include a separator 17 to prevent the first electrode 11 and the second electrode 15 from directly contacting with each other. In addition, the separator 17 may be positioned at the outermost side of the electrode assembly 10 along the laminating direction to prevent the electrode assembly 10 from directly contacting with the case 113.

Referring to FIG. 2, one separator 17 may be folded in a zigzag shape to be positioned between the first electrode 11 and the second electrode 15 and/or at the outermost side of the electrode assembly 10 along the laminating direction.

In other words, the electrode assembly 10 may be formed by inserting the first electrode 11 and/or the second electrode 15 between the folds of the separator 17. To this end, the separator 17 may be provided in a zigzag shape. Therefore, the first electrode 11 and the second electrode 15 may be inserted between the spaces of a separator 17 from opposite directions with the zigzag-folded separator 17 therebetween.

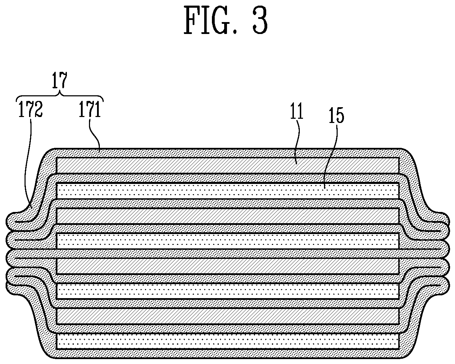

Meanwhile, the separator 17 may include a first part 171 (see FIG. 3) that overlaps the first electrode 11 and/or the second electrode 15 along the laminating direction, and a second part 172 (see FIG. 3) that does not overlap the first electrode 11 and/or the second electrode 15.

Referring to FIG. 2, when the separator 17 is folded in a zigzag shape, the second part 172 may be disposed on both sides of the first electrode 11 and/or the second electrode 15 along the laminating direction.

In other words, when the separator 17 folded in a zigzag shape is orthogonally projected onto a virtual plane along the laminating direction, the orthogonally projected area may be larger than the area of the first electrode 11 and/or the second electrode 15. Referring to FIG. 2, it can be seen that the length W1 of the separator 17 folded in a zigzag shape in one cross-section of the electrode assembly 10 is longer than the length of the first electrode 11 and/or the second electrode 15.

In other words, the area of a part of the separator 17 positioned to face the first electrode 11 and/or the second electrode 15 may be larger than that of the first electrode 11 and/or the second electrode 15, so that a margin part M that does not overlap the first electrode 11 and/or the second electrode 15 may be present.

The margin part M may be positioned on both sides along a direction perpendicular to the laminating direction of the electrode assembly 10. In addition, the margin part M may be a part corresponding to the second part 172 in the separator 17 folded in a zigzag shape.

FIG. 3 shows a schematic illustration of one cross-section of an electrode assembly after heating one example of a separator according to the present disclosure.

Referring to FIG. 3, the electrode assembly 10 according to the present disclosure may join at least a part of the second part 172 corresponding to the margin part M.

The second part 172 may be joined to each other through heat fusion. Therefore, since the movement of the first electrode 11 and/or the second electrode 15 is restricted, misalignment of the first electrode 11 and/or the second electrode 15 due to the movement of the electrode assembly 10 or vibration during manufacturing can be reduced. In addition, even when the manufacturing speed of the electrode assembly 10 is increased, misalignment of the first electrode 11 and/or the second electrode 15 may be reduced.

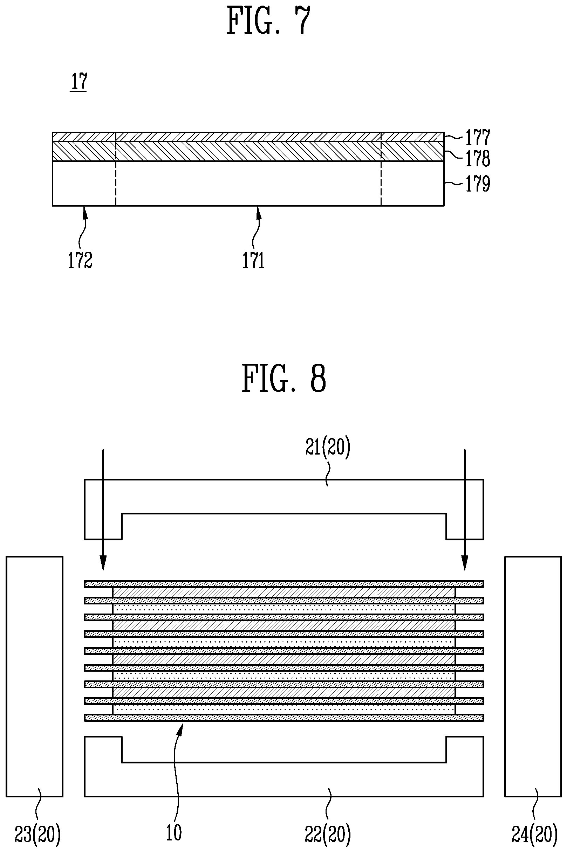

In order to join the second part 172 to each other, the electrode assembly 10 according to the present disclosure may include a fusion layer 177 (see FIG. 7) in the second part 172 of the separator 17.

In other words, the difference between the positions of the first electrode 11 and the second electrode 15, which are laminated before heat fusion of the fusion layer 177, and the positions of the first electrode 11 and the second electrode 15 after the heat fusion (or bonding) of the fusion layer 177 may be within a preset tolerance range. The fusion layer 177 will be described later.

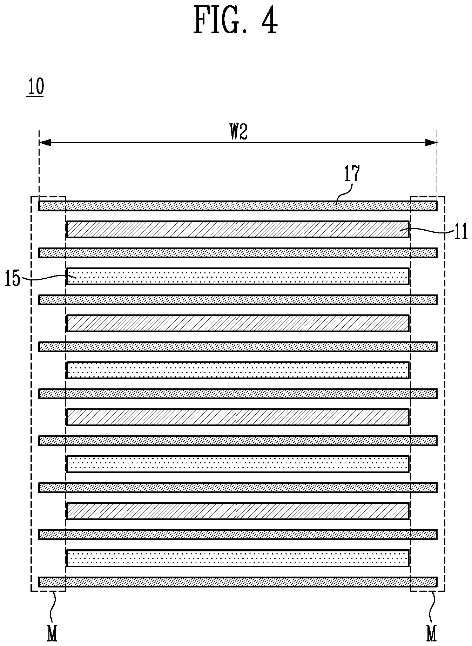

FIG. 4 shows a schematic illustration of a cross-section of an electrode assembly before heating another example of a separator according to the present disclosure.

Unlike the single separator 17 illustrated in FIGS. 2 and 3, which is folded in a zigzag shape, referring to FIG. 4, the separator 17 according to another example of the present disclosure is not formed integrally, but may be provided in a plural number. Each of the plurality of separators 17 may be disposed between the first electrode 11 and/or the second electrode 15 along the laminating direction, or on the outside of the electrode assembly 10 along the laminating direction.

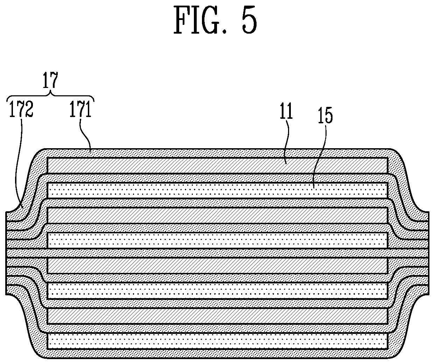

Referring to FIG. 4, each of the plurality of separators 17 may include a first part 171 (see FIG. 5) that overlaps the first electrode 11 and/or the second electrode 15 along the laminating direction, and a second part 172 (see FIG. 5) that is positioned on both sides of the first part 171 and does not overlap the first electrode 11 and/or the second electrode 15.

In other words, since the area of each separator 17 is larger than that of the first electrode 11 and/or the second electrode 15, the second part 172 may not overlap with the first electrode 11 and/or the second electrode 15. The second part 172 may also be referred to as a margin part M of the separator 17. Referring to FIG. 4, it can be seen that the length W2 of the separator 17 in one cross-section of the electrode assembly 10 is longer than the length of the first electrode 11 and/or the second electrode 15.

The margin part M may be positioned on both sides along a direction perpendicular to the laminating direction. In addition, the margin part M may be a part corresponding to the second part 172 in each of the plurality of separators 17 laminated along the laminating direction.

FIG. 5 shows a schematic illustration of a cross-section of an electrode assembly after heating another example of a separator according to the present disclosure.

Referring to FIGS. 4 and 5, the electrode assembly 10 according to the present disclosure may be joined by heat-fusing each other at least parts of the second part 172 corresponding to the margin part M.

In other words, since the movement of the first electrode 11 and/or the second electrode 15 is restricted through the heat fusion, misalignment of the first electrode 11 and/or the second electrode 15 due to the movement of the electrode assembly 10 or vibration during manufacturing can be reduced. In addition, even when the manufacturing speed of the electrode assembly 10 is increased, misalignment of the first electrode 11 and/or the second electrode 15 can be reduced.

FIGS. 3 and 5 illustrate that when the second part 172 of the separator 17 is joined to each other, there is no gap between the second part 172 and a side surface of the first electrode 11 and/or the second electrode 15. However, when the separator 17 may restrict the movement of the first electrode 11 and/or the second electrode 15, it may be acceptable that a certain amount of clearance is present between the second part 172 and the side surface of the first electrode 11 and/or the second electrode 15 when the second part 172 is joined.

Meanwhile, FIGS. 2 to 5 illustrate a method of forming the electrode assembly 10 by folding one separator in a zigzag shape or by using a plurality of individual separators.

However, the method of manufacturing the electrode assembly 10 is not limited thereto. For example, the electrode assembly 10 may be formed in a roll shape by surrounding a cathode and an anode, which are disposed separately by the separator 17. An electrode assembly of this form may be referred to as a jelly roll.

When the separator 17 may include a second part 172 forming a margin part M on both sides of the first electrode 11, the electrode assembly 10 may be formed in any shape.

FIG. 6 shows one example of a separator according to the present disclosure.

More specifically, FIG. 6 illustrates an example of unfolding a zigzag-shaped separator 17.

Referring to FIG. 6, when the separator 17 folded in a zigzag shape is unfolded again, the separator 17 may be provided with a plurality of the first parts 171, and the second parts 172 may be positioned on both sides of the first part 171. Therefore, the plurality of first parts 171 may be disposed at a preset interval.

For understanding, only the schematic shapes of the first electrode 11 and the second electrode 15 are indicated by dotted lines in FIG. 6. Therefore, the non-coating portion 119 of the first electrode 11 and the non-coating portion 159 of the second electrode are illustrated by dotted lines in FIG. 6. In addition, an area A1 occupied by the coating portion of the first electrode 11 and/or the second electrode 15 is illustrated. In addition, an area A2 corresponding to a margin part M (see FIG. 2 or FIG. 4) where the separator 17 does not overlap the first electrode 11 and/or the second electrode 15 is also schematically illustrated.

For a rough explanation, the area A1 occupied by the coating portion of the first electrode 11 and/or the second electrode 15 is illustrated as the same as the area of the first part 171, but the area A1 occupied by the coating portion of the first electrode 11 and/or the second electrode 15 may be smaller than the area of the first part 171. The area A2 corresponding to the margin part M is also illustrated as the same as the area of the second part 172, but this is only an example.

Preferably, the sizes of the second parts 172 positioned on both sides of the first part 171 may be the same.

In other words, the lengths L1 of the second parts 172 positioned on both sides of the first part 171 may all be the same.

Referring to FIG. 6, , it can be seen that when the separator 17 folded in a zigzag shape is unfolded again, the plurality of first parts 171 are disposed to be spaced apart by a length L2 corresponding to twice the length L1 of the second part 172. This is because, when the separator 17 is folded, a margin part M must be secured on both sides of the first electrode 11 and/or the second electrode 15. Therefore, the first part 171 that is closest to both ends 175 and 176 of the separator 17 along the X-direction may be positioned to be spaced apart from both ends of the separator 17 by the length L1 of the second part 172.

The separator 17 may further include a virtual folding line 173 between each of the plurality of first parts 171. The folding line 173 may be positioned to be spaced apart at an equal distance from the any one first part 171 and the other first part 171 adjacent to the any one first part 171.

When the separator 17 is folded in a zigzag shape with the folding line 173 in the middle, second parts 172 having the same size will be positioned on both sides of the first part 171. The first part 171 will overlap the first electrode 11 and/or the second electrode 15 along the laminating direction (the direction perpendicular to the X-direction and the Y-direction). On the other hand, the second part 172 will not overlap the first electrode 11 and/or the second electrode 15.

Therefore, referring to FIG. 3, when the second parts 172 are joined to each other, the joined second parts 172 will restrict the movement of the first electrode 11 and/or the second electrode 15, thereby minimizing misalignment of the first electrode 11 and/or the second electrode 15 along the X-direction.

FIG. 7 shows one cross-section of a separator according to the present disclosure.

Referring to FIG. 7, the separator 17 may include a porous substrate layer 179. The porous substrate layer 179 may be formed of a material that prevents the first electrode 11 and the second electrode 15 from contacting each other, but is permeable to ions. In general, the porous substrate layer 179 may be formed of a polyolefin (PO)-based material, such as polyethylene (PE) and polypropylene (PP), that has electrochemical stability and appropriate mechanical strength.

In other words, the PO-based material may be selected from one or more selected from PE, PP, and copolymers thereof, but is not limited thereto.

In addition, the porous substrate layer 179 may have a thin film or film form having a thickness of 5 to 30 µm, and may include fine pores in the thin film. In addition, the thin film may be manufactured after being repeatedly elongated or stretched.

Meanwhile, the separator 17 according to the present disclosure may include a heat-resistant layer 178 laminated on one surface or both surfaces of the porous substrate layer 179 to improve the heat resistance of the separator 17.

In addition, the heat-resistant layer 178 may be laminated between the fusion layer 177 and the porous substrate layer 179. More specifically, the heat-resistant layer 178 may be laminated so as to overlap the fusion layer 177.

For explanation, FIG. 7 illustrates an example in which the heat-resistant layer 178 and the fusion layer 177 are applied to only one surface of the porous substrate layer 179, but, in contrast, the heat-resistant layer 178 and the fusion layer 177 may be applied to both surfaces of the porous substrate layer 179.

Generally, the tensile strength of the porous substrate layer 179 is 500 kgf/cm² or more in all directions, and in order to uniformly increase the strength in all directions, it may be manufactured through biaxial stretching, in which it is stretched in the X-direction (see FIG. 6) and the Y-direction (see FIG. 6), rather than uniaxial stretching. The separator 17 manufactured through repeated stretching has the advantage of increasing the tensile strength in the stretched direction, but may have the disadvantage of shrinking when the temperature increases because there remains a stress that tends to shrink in the stretched direction.

To overcome this, the separator 17 according to the present disclosure may include a heat-resistant layer 178 laminated (or applied) with a preset heat-resistant thickness on one surface or both surfaces of the porous substrate layer 179.

In other words, the separator 17 according to the present disclosure may include the heat-resistant layer 178 that is brought into contact with the first electrode 11 and/or the second electrode 15 on the porous substrate layer 179 at least of the first part 171.

In addition, the separator 17 according to the present disclosure may include the heat-resistant layer 178 on one surface or both surfaces of the porous substrate layer 179 in the entire area including not only the first part 171 but also the second part 172.

The heat-resistant layer 178 may include inorganic particles and a binder (or a polymer binder) that binds the inorganic particles. The content of the inorganic particles of the heat-resistant layer 178 may be 60% to 99% by weight based on 100% by weight of a mixture (or the entire composition) including the inorganic particles and the polymer binder. In addition, the content of the binder of the heat-resistant layer 178 may be 40% to 1% by weight based on 100% by weight of the entire composition.

When the content of the inorganic particles is less than 60% by weight, the content of the binder becomes too much, and the pore size and porosity decrease due to the decrease in the vacant space formed between the inorganic particles, which may cause deterioration in the performance of a battery cell. On the other hand, when the content of the inorganic particles exceeds 99% by weight, the content of the binder is too little, and thus the mechanical properties of the separator 17 may deteriorate due to the weakening of the adhesive force between the inorganic particles.

The size of the inorganic particles included in the heat-resistant layer 178 may be 0.1 µm or more and 2 µm or less.

The size of the inorganic particles may be measured using a particle size analyzer measuring the size of particles using laser diffraction. The measured size of the particles shows a specific statistical distribution according to the size, and the median value (D50) may be determined as the size of the inorganic particles.

In another measurement method, the measurement method related to the size of the inorganic particles may be performed according to ASTM E3340.

In addition, the heat-resistant thickness may be 1 µm or more and 10 µm or less.

Herein, the above-described heat-resistant thickness and/or the fusion thickness described below refer to the thickness in which the heat-resistant layer 178 and/or the fusion layer 177 are laminated or applied. The thickness of the heat-resistant layer 178 and/or the fusion layer 177 may be calculated by laminating the same on the porous substrate layer 179, measuring the thickness (referred to as the total thickness), and then subtracting the thickness of the porous substrate layer 179. In other words, the heat-resistant thickness or the fusion thickness may be calculated by subtracting the thickness of only the porous substrate layer 179, which is already known, from the total thickness.

To this end, the thickness of the separator 17 (i.e., the thickness of the porous substrate layer 179 coated with the heat-resistant layer 178 and/or the fusion layer 177, or the total thickness) may be measured using a contact thickness gauge that is placed on a flat support surface and then contacts with the separator 17 with a tip at a constant pressure.

As another measurement method, the measurement method related to the separator (or thin film) may be performed according to ASTM D6988.

The inorganic particles may preferably be a chemically and electrochemically stable material. To this end, the inorganic particles may be one selected from aluminum oxide such as alumina and boehmite, barium titanium oxide, titanium oxide, magnesium oxide, clay glass powder, or a combination thereof.

Meanwhile, the separator 17 according to the present disclosure may include a fusion layer 177 formed with a preset fusion thickness for bonding the separators 17 together.

The separator 17 according to the present disclosure may include a fusion layer 177 formed with a preset fusion thickness on at least one surface or both surfaces of the porous substrate layer in the second part 172.

Like the heat-resistant layer 178, the fusion layer 177 may be formed on one surface or both surfaces of the porous substrate layer 179 in the entire area of the separator 17 including not only the first part 171 of the separator 17 but also the second part 172.

Preferably, the fusion layer 177 may be formed on the outermost layer of the separator 17. For example, when one surface of the separator 17 includes the heat-resistant layer 178, the heat-resistant layer 178 may be first laminated on the porous substrate layer 179, and then the fusion layer 177 may be laminated on the heat-resistant layer 178.

In other words, the fusion layer 177 may be positioned farther than the heat-resistant layer 178 from the porous substrate layer 179.

The heat-resistant layer 178 and the fusion layer 177 may be coating layers laminated on the porous substrate layer 179.

As described above, the fusion layer 177 included in at least a part of the second part 172 is for bonding the separators 17 together. In other words, while a typical separator fuses an electrode plate and a separator or bonds a porous substrate layer 179 that is not applied or laminated, the fusion layer 177 may bond a porous substrate layer 179 (hereinafter referred to as a composite separator) that is applied or laminated.

By bonding the composite separator through the fusion layer 177, bonding (or fusion) of the composite separator may be achieved under relatively improved bonding conditions, that is, bonding (or fusion) of the composite separator at relatively low temperatures, low pressures, and short time.

The conventional method of bonding an electrode and a separator required an adhesive layer including a polymer material having high adhesive strength at a relatively high glass transition temperature, because the surface of an anode is smooth and includes no separate adhesive material. Alternatively, the conventional separator may require a polymer material having high adhesive strength at a very low glass transition temperature in order to bond an electrode (especially an anode having a relatively smooth surface) and a separator.

On the other hand, a separator 17 according to the present disclosure includes a fusion layer 177 in all of the separator 17 to be bonded to each other, so that the fusion layer 177 may bond the second part 172 to each other at a relatively low glass transition temperature, under a low pressure and in a short time compared to the conventional method.

The bonding (or fusion) may be achieved through a method referred to as heat fusion. To this end, the fusion layer 177 can include polymer particles having a glass transition temperature higher than or equal to 30 °C and lower than or equal to 90 °C. In other words, the polymer particles may bond the second part 172 to each other within the glass transition temperature range.

To this end, the polymer particles included in the fusion layer 177 may be a polymer binder (or a polymer binder made of a polymer material). The polymer binder may be bonded to each other at a temperature higher than the glass transition temperature.

When polymer particles having a relatively low glass transition temperature are used (for example, when the glass transition temperature at which heat fusion occurs is lower than 30 °C), it is easy to secure adhesive strength, but a blocking phenomenon may occur in which separators wound in a roll shape stick to each other before assembling the electrode assembly 10. In addition, when polymer particles having a relatively high glass transition temperature are used (for example, when the glass transition temperature is higher than 90 °C), it may be difficult to secure adhesive strength.

In addition, using a relatively low temperature and a low pressure can minimize a decrease in the permeability of the separator 17 after fusion and an increase in the resistance of the battery cell caused thereby. In addition, using a relatively short time can minimize an increase in the battery cell assembly time due to the fusion.

The fusion layer 177 may include polymer particles. The shape of the polymer particles may be heterogeneous (or amorphous). In addition, the size of the polymer particles may be preferably larger than or equal to 0.1 µm and smaller than or equal to 0.7 µm.

When the size of the polymer particles is smaller than 0.1 µm, they are relatively fine and difficult to handle, and a relatively large amount must be applied to implement adhesive strength. In addition, when the size of the polymer particles exceeds 0.7 µm, the fusion thickness of the fusion layer 177 may become thick. When the thickness of the fusion layer 177 becomes too thick, the migration distance of ions that must penetrate the fusion layer 177 increases, which may increase resistance.

Preferably, the fusion thickness in the separator 17 according to the present disclosure may be less than or equal to 1 µm.

Meanwhile, the method of forming the separator 17 and the electrode assembly 10 according to the present disclosure is a method that is obvious to those skilled in the art, and it is not particularly limited.

In particular, the heat-resistant layer 178 may be applied or laminated using a gravure coating method, and the fusion layer 177 may be applied or laminated using a bar coating or spray coating method on the porous substrate layer 179.

The polymer particles may include a polymer material composed of acrylate and a copolymer thereof having a glass transition temperature higher than or equal to 30 °C and lower than or equal to 90 °C. When the glass transition temperature is lower than 30 °C, the pores of the heat-resistant layer 178 or the porous substrate layer may all be blocked during fusion, which may cause a significant decrease in the permeability of the separator 17, thereby shortening the lifetime of the battery cell. In addition, when the glass transition temperature exceeds 90 °C, the fusion strength is not exhibited under general heat fusion temperature conditions.

Meanwhile, FIGS. 2 and 6 illustrate an example of a separator 17 in which one separator 17 is folded in a zigzag shape. On the other hand, the electrode assembly 10 illustrated in FIG. 4 illustrates an example including a plurality of separators 17 that are laminated along the laminating direction. However, the description of the heat-resistant layer 178 and the fusion layer 177 formed on the first part 171 and the second part 172 positioned on both sides of the one first part 171 is the same as the description of FIG. 6, and thus is omitted.

Hereinafter, examples and comparative examples related to the fusion layer 177 are described.

### Examples 1 to 3

### (1) Selection of porous substrate layer

A PO-based microporous film was used as a porous substrate layer 179. Specifically, a secondary battery separator having a thickness of 9 µm consisting of a single polyethylene layer was used.

### (2) Manufacturing process for laminating (or applying) a heat-resistant layer 178 on the porous substrate layer

3 g of an inorganic dispersant and 231 g of boehmite (average particle size 0.7 µm, KC CO. LTD.) were added to 150 g of water (DI-water) and homogenously dispersed, and then 14 g of a polyacrylate-based copolymer polymer binder (Tg 155 °C, Zeon Corporation, Japan) was added to prepare a slurry for heat-resistant layer coating.

### (3) Solution preparation process for fusion layer 177 coating

For Example 1, 20 g of polyacrylate-based copolymer polymer binder (Tg 45 °C, Zeon Corporation, Japan) was added to 140 g of water (DI-water) to prepare a slurry for fusion layer coating.

The separators of Examples 2 and 3 were manufactured under the same conditions as those of Examples 1 and 3, except that the glass transition temperature of the polymer binder included in the fusion layer 177 was different, and the evaluation of the fusion strength and anti-blocking properties was performed using the same method Example 1.

### (4) Process for manufacturing a composite separator through coating

Using a conventional bar coating facility, a heat-resistant layer coating slurry was applied on the porous substrate layer 179, and then dried. Specifically, a heat-resistant layer 178 of 4 µm in total was coated on both surface, 2 µm on each one surface of the porous substrate layer 179, to manufacture a separator coated (or laminated) with a heat-resistant layer 178 of a total thickness of 13 µm. Thereafter, a fusion layer 177 was applied/dried on the surface of the heat-resistant layer 178 again using a bar coating facility, about 0.2 µm on each one surface, thereby manufacturing a separator (composite separator) coated with a fusion layer 177/heat-resistant layer 178 of a total thickness of 13.4 µm.

The manufactured composite separator was wound into a roll shape of about 100 m (meters) in length using a 3-inch core.

### (5) Hot pressing heat fusion and fusion strength evaluation process

The composite separator and the anode (second electrode) were each prepared with the sizes of 50 mm (millimeters) x 50 mm (horizontal and vertical). First, in order to evaluate the fusion strength between the composite separator and the composite separator, the two sheets of composite separators were overlapped by half each, placed between Teflon sheets, and fused with a hot press. In addition, in order to evaluate the fusion strength between the separator and the electrode, one sheet of composite separator and one sheet of anode were overlapped by half each, placed between Teflon sheets, and fused with a hot press. The heat fusion conditions of the hot press were a temperature of 90 °C and a pressure of 20 kgf/cm² applied for 10 seconds.

Thereafter, fusion strength evaluation was performed using a universal testing machine (UTM). The separator + separator film (first specimen) or separator + anode film (second specimen) that were fused half-and-half was mounted on the UTM, and the maximum strength at which the fused parts were detached was measured, and the unit of the measured fusion strength was gf/mm (maximum strength measured/fused length).

### (6) Evaluation of anti-blocking properties

While unwinding the separator wound in a roll state, it was checked whether a blocking phenomenon occurred in which the separators stuck to each other and did not unwind well.

The method for measuring the blocking properties of the separator was performed according to ASTM D 1893 or ASTM D 3354. ASTM D 1893 or ASTM D 3354 are methods for evaluating how easy it is to separate two layers of films (or separators).

For example, a hand test is a method for separating two layers of films by hands, and although it may not be expressed in units, the degree of blocking may be qualitatively distinguished into four categories as described below.
(1) No blocking - There is no adhesion between two layers of film, and they separate easily.
(2) Very slight blocking - Two layers of film are slightly adhered, but may be separated with a very little force.
(3) Slight blocking - Two layers of film are adhered to each other, and may be separated only with a considerable amount of force, but there is no surface damage when separated.
(4) Blocking - When two layers of film are forcibly peeled off, they may be separated, but the film surface is damaged.

Among the four categories, cases (1) and (2) were determined to satisfy anti-blocking, and cases (3) and (4) were determined to fail to satisfy anti-blocking.

### Comparative Example 1

### (1) Selection of separator (porous substrate layer)

A secondary battery separator with a thickness of 13 µm consisting of only a single PE layer as a PO-based microporous film was used.

### (2) Hot pressing fusion and fusion strength evaluation process

Comparative Example 1 is an example in which the separator consists only of a porous substrate layer. However, in Comparative Example 1, the first and second specimens were manufactured in the same manner as in other examples and fused in the same manner. In addition, the fusion strength evaluation of the first and second specimens was performed under the same conditions as in other examples.

In Comparative Example 1, the fusion strength and anti-blocking properties were evaluated by the same methods as in other examples.

### Comparative Examples 2 to 4

### (1) Selection of porous substrate layer

A secondary battery separator with a thickness of 9 µm consisting of only a single PE layer as a PO-based microporous film was used.

### (2) Manufacturing process for laminating (or applying) a heat-resistant layer 178 on the porous substrate layer

3 g of an inorganic dispersant and 231 g of boehmite (average particle size 0.7 µm, KC CO. LTD.) were added to 150 g of water (DI-water) and homogenously dispersed, and then 14 g of a polyacrylate-based copolymer polymer binder (Tg 155 °C, Zeon Corporation, Japan) was added to prepare a slurry for heat-resistant layer coating.

### (3) Solution preparation process for fusion layer 177 coating

18 g of polyacrylate-based copolymer polymer binder (Tg 25 °C, Zeon Corporation, Japan) was added to 140 g of water (DI-water) to prepare a slurry for fusion layer coating.

### (4) Process for manufacturing a composite separator through coating

Using a conventional bar coating facility, a heat-resistant layer coating slurry was applied on the porous substrate layer 179, and then dried. Specifically, a heat-resistant layer 178 of 4 µm in total was coated on both surface, 2 µm on each one surface of the porous substrate layer 179, to manufacture a separator coated (or laminated) with a heat-resistant layer 178 of a total thickness of 13 µm. Thereafter, a fusion layer 177 was applied/dried on the surface of the heat-resistant layer 178 again using a bar coating facility, about 0.2 µm on each one surface, thereby manufacturing a separator (composite separator) coated with a fusion layer 177/heat-resistant layer 178 of a total thickness of 13.4 µm.

The manufactured composite separator was wound into a roll shape of about 100 m (meters) in length using a 3-inch core.

The evaluation of the fusion strength and anti-blocking properties of Comparative Examples 2 to 4 was performed using the same method as other examples, except that the glass transition temperature of the fusion layer 177 was different.

### (5) Hot pressing heat fusion and fusion strength evaluation process

The composite separator and the anode (second electrode) were each prepared with the sizes of 50 mm (millimeters) x 50 mm (horizontal and vertical). First, in order to evaluate the fusion strength between the composite separator and the composite separator, the two sheets of composite separators were overlapped by half each, placed between Teflon sheets, and fused with a hot press. In addition, in order to evaluate the fusion strength between the separator and the electrode, one sheet of composite separator and one sheet of anode were overlapped by half each, placed between Teflon sheets, and fused with a hot press. The heat fusion conditions of the hot press were a temperature of 90 °C and a pressure of 20 kgf/cm² applied for 10 seconds.

Thereafter, fusion strength evaluation was performed using a UTM. The separator + separator film (first specimen) or separator + anode film (second specimen) that were fused half-and-half was mounted on the UTM, and the maximum strength at which the fused parts were detached was measured, and the unit of the measured fusion strength was gf/mm (maximum strength measured/fused length).

### (6) Evaluation of anti-blocking properties

While unwinding the separator wound in a roll state, it was checked whether a blocking phenomenon occurred in which the separators stuck to each other and did not unwind well.

The method for measuring the blocking properties of the separator was performed according to ASTM D 1893 or ASTM D 3354. ASTM D 1893 or ASTM D 3354 are methods for evaluating how easy it is to separate two layers of films (or separators).

For example, a hand test is a method for separating two layers of films by hands, and although it may not be expressed in units, the degree of blocking may be qualitatively distinguished into four categories as described below.
(1) No blocking - There is no adhesion between two layers of film, and they separate easily.
(2) Very slight blocking - Two layers of film are slightly adhered, but may be separated with a very little force.
(3) Slight blocking - Two layers of film are adhered to each other, and may be separated only with a considerable amount of force, but there is no surface damage when separated.
(4) Blocking - When two layers of film are forcibly peeled off, they may be separated, but the film surface is damaged.

Among the four categories, cases (1) and (2) were determined to satisfy anti-blocking, and cases (3) and (4) were determined to fail to satisfy anti-blocking.

### Experimental results

Tables 1 and 2 below summarize the experimental results. Specifically, Table 1 describes Examples 1 to 3 and Comparative Examples 1 and 2, and Table 2 describes Examples 1 to 3 and Comparative Examples 4 and 5.

**[Table 1]**

| | Example 1 | Example 2 | Example 3 | Comparative Example 1 | Comparative Example 2 |
|---|---|---|---|---|---|
| Glass transition temperature (Tg) of polymer binder | 45 °C | 35 °C | 87 °C | No separate fusion layer | 25 °C |
| Fusion strength of first specimen (separator/separator) | 5.2 gf/mm | 6.2 gf/mm | 5.8 gf/mm | Not fused | 5.9 gf/mm |
| Fusion strength of second specimen(separator/anode) | 2.4 gf/mm | 2.1 gf/mm | 1.7 gf/mm | Not fused | 3.5 gf/mm |
| Anti-blocking properties | Satisfied | Satisfied | Satisfied | Satisfied | Dissatisfied |

**[Table 2]**

| | Example 1 | Example 2 | Example 3 | Comparative Example 3 | Comparative Example 4 |
|---|---|---|---|---|---|
| Glass transition temperature (Tg) of polymer binder | 45 °C | 35 °C | 87 °C | 28 °C | 120 °C |
| Fusion strength of first specimen (separator/separator) | 5.2 gf/mm | 6.2 gf/mm | 5.8 gf/mm | 5.7 gf/mm | Not measurable (Not fused) |
| Fusion strength of second specimen(separator/anode) | 2.4 gf/mm | 2.1 gf/mm | 1.7 gf/mm | 3.3 gf/mm | Not measurable (Not fused) |
| Anti-blocking properties | Satisfied | Satisfied | Satisfied | Dissatisfied | Satisfied |

Comparative Example 1 is a case where a PE separator formed only with a porous substrate layer without a fusion layer 177/heat-resistant layer 178 was used as is. Referring to Table 1, it was confirmed that neither the first specimen (separator/separator) nor the second specimen (separator/anode) were fused after hot pressing fusion.

In general, in order to perform heat sealing a PE material film by melting it with heat, a process of melting and bonding it together by raising the temperature near to the melting point of PE is required. On the other hand, a PE material used as a secondary battery separator is very thin and contains many pores, so it is relatively weaker than a general PE film, and there is a possibility of melting fracture or damage when heat sealing is applied.

Comparative Example 2 is a case where a separator including a fusion layer 177 using polymer particles having a low glass transition temperature (Tg) was used. Referring to Table 1, it can be seen that first specimen (separator/separator) of Comparative Example 2 exhibited a slightly higher value in the fusion strength than any other examples except for Example 2 in Table 1. In addition, it can be seen that the second specimen (separator/anode) of Comparative Example 2 exhibited a slightly higher value in the fusion strength than Examples 1, 2, and 3. However, it was found that the separator wound in a roll form had anti-blocking properties that were insufficient to prevent the blocking phenomenon in which the separators stick to each other. This is because the separators are unnecessarily adhered to each other when stored in a roll form, so it will be impossible to apply the conditions of Comparative Example 2 to an actual manufacturing process.

Referring to Table 2, Comparative Example 3 is an example using a polymer binder having a glass transition temperature that was higher than that of Comparative Example 2 and lower than 30°C, and Comparative Example 4 is the result of an experiment conducted at 120 °C, which is higher than that of Example 3. Comparative Examples 3 and 4 failed satisfy the anti-blocking characteristics and fusion strength, respectively.

Therefore, referring to Table 1 and Table 2, the glass transition temperature of the polymer particles (or polymer binders) included in the fusion layer 177 may be higher than 30 °C and lower than 90 °C.

Preferably, referring to Examples 1 to 3, the glass transition temperature of the polymer particles (or polymer binders) included in the fusion layer 177 may be higher than or equal to 35 °C and lower than or equal to 87 °C.

Meanwhile, various methods may be used for bonding the separator and electrodes (collectively, first electrode and second electrode). Considering productivity and performance implementation of secondary batteries, a more advantageous method may be used. Among them, the first method is to place an electrode on a separator, apply heat and pressure to bond it, and then roll the separator with the attached electrode into a roll to manufacture a battery. The second method is to wind an electrode and a separator to make a jelly roll, apply heat and pressure to bond the electrode and the separator, then put the integrated jelly roll into a case 113, inject an electrolyte solution, and seal it to manufacture a secondary battery (or battery cell). The third method is to place the jelly roll into a case 113, inject an electrolyte solution, and then apply heat and pressure to bond the electrode and the separator.

The first and second methods are referred to as dry bonding methods because they bond the electrode and the separator by applying heat and pressure in the absence of an electrolyte solution, and the third method is referred to as a wet bonding method because the electrode and the separator are bonded when an electrolyte solution is included.

Depending on the type of polymer particles included in the fusion layer 177, the fusion strength may differ between cases with and without an electrolyte solution. In other words, since the fusion strength may vary depending on the presence or absence of an electrolyte and the components of the cathode and the anode, the type of the polymer particles may be varied depending on the design.

Meanwhile, referring to FIGS. 2 and 3, or FIGS. 4 and 5, a method for manufacturing an electrode assembly 10 according to the present disclosure may be explained as follows.

In other words, a method for manufacturing an electrode assembly 10 according to the present disclosure may include: a step of alternately disposing a first electrode 11 and a second electrode 15 having a different electrical polarity from the first electrode between each space of a separator 17 along a preset laminating direction; and a step of heating and joining a second part 172, which is one part of a separator 17 located on both sides of a first part 171, which is another part of the separator 17 that overlaps the first electrode 11 and the second electrode 15 along the laminating direction.

In the step of alternately disposing the first electrode 11 and the second electrode 15, the method for manufacturing the electrode assembly 10 according to the present disclosure may alternately dispose the first electrode 11 and the second electrode 15 in a space formed between a plurality of separators 17 laminated along the laminating direction or between one separator 17 folded in a zigzag shape.

Thereafter, the method for manufacturing the electrode assembly 10 according to the present disclosure may perform a step of heating and bonding the second part 172. In the step of heating and bonding the second part 172, the method for manufacturing the electrode assembly 10 according to the present disclosure may bond the second part 172 to each other through heat fusion.

In other words, as described above, by heating the fusion layer 177 including polymer particles having a glass transition temperature of higher than or equal to 30 °C and lower than or equal to 90 °C, which is laminated on the second part 172, to the glass transition temperature, the second part 172 may be bonded to each other. This may be referred to as heat fusion. In general, heat fusion means bonding different materials through pressurizing and heating.

Meanwhile, before the second part 172 is fused, there is a risk that the first electrode 11 and/or the second electrode 15 may move unintentionally between the separator 17, causing misalignment of the first electrode 11 and the second electrode 15. Therefore, a jig or a pressurizing and heating device 20 (see FIG. 8) capable of pressurizing and heating the separator 17 while restricting the movement of the electrode assembly 10 in a non-bonded state may be required.

FIG. 8 shows one example of a jig or a pressurizing and heating device for manufacturing an electrode assembly according to the present disclosure.

Referring to FIG. 8, in the electrode assembly 10, a separator 19 (see FIG. 2) may be disposed between the first electrode 11 (see FIG. 2) and the second electrode 15 (see FIG. 2) along the laminating direction. The separator 17 may be formed integrally and folded in a zigzag shape. Alternatively, the separator 17 may be provided in a plural number and placed between the first electrode 11 and the second electrode 15 along the laminating direction.

Thereafter, the electrode assembly 10 may be formed by joining each other the second part 172 (see FIG. 6), which is a part of the separator 17 that does not overlap the first electrode 11 or the second electrode 15 along the laminating direction (margin part M or parts positioned on both sides of the first electrode 11 and the second electrode 15).

The bonding of the second part 172 may be achieved through heat fusion (or bonding). Alternatively, the bonding of the second part 172 may achieved using a method such as vibration fusion or ultrasonic fusion.

For the heat fusion of the second part 172, the electrode assembly 10 according to the present disclosure may utilize a pressurizing and heating device 20. The pressurizing and heating device 20 may include a jig for pressurizing and heating a part corresponding to the second part 172 in the electrode assembly 10.

To this end, the pressurizing and heating device 20 may include a first jig 21 and a second jig 22 that are provided to be movable along the laminating direction and pressurize and heat a part where the second part 172 is laminated. The first jig 21 and the second jig 22 may be provided in a U-shape to prevent the part where the first part 171 (see FIG. 6) is laminated from being pressurized.

Since the first jig 21 and the second jig 22 must be movable along the laminating direction for pressurization, the pressurizing and heating device 20 may further include a driving portion (not shown) for moving the first jig 21 and the second jig 22. In addition, the first jig 21 and the second jig 22 may include a heater for heating the second part 172.

In addition, the pressurizing and heating device 20 may further include side jigs 23 and 24 that support both sides of the electrode assembly 10 to prevent misalignment of the first electrode 11, the second electrode 15, and the separator 17 while the first jig 21 and the second jig 22 are pressurized and heated. Since the side jigs 23 and 24 are also in contact with the second part 172, they may include a heater for heating the second part 172.

In other words, A method for manufacturing an electrode assembly 10 comprises a step of alternately disposing a first electrode 11 and a second electrode 15 having a different electrical polarity from the first electrode 11 between each space of a separator 17 along a preset laminating direction, and a step of heating and joining a second part 172, which is one part of the separator 17 located on both sides of a first part 171, which is another part of the separator 17 that overlaps the first electrode 11 and the second electrode 15 along the laminating direction. And in the step of heating and joining the second part 172, a fusion layer 177 laminated on the second part 172 and including polymer particles having a glass transition temperature higher than or equal to 30 °C or and lower than or equal to 90 °C is joined each other to at least a part of the second part through heating at the glass transition temperature.

Some of the aspects of the present disclosure are as follows:
Aspect 1: A separator (17) for secondary batteries, the separator (17) comprising:
   a porous substrate layer (179); and
   a fusion layer (177) laminated to a preset fusion thickness on at least one area of one or both surfaces of the porous substrate layer (179) and including polymer particles having a glass transition temperature higher than or equal to 30 °C or lower than or equal to 90 °C.
Aspect 2: The separator (17) for secondary batteries according to aspect 1 or 2, wherein the size of the polymer particles is larger than or equal to 0.1 µm and smaller than or equal to 0.7 µm.
Aspect 3: The separator (17) for secondary batteries according to any one of the preceding aspects, wherein the polymer particles are any one or a combination of acrylate and a copolymer of the acrylate.
Aspect 4: The separator (17) for secondary batteries according to any one of the preceding aspects, wherein the fusion thickness is less than or equal to 1 µm.
Aspect 5: The separator (17) for secondary batteries according to any one of the preceding aspects, wherein the shape of the polymer particles is amorphous.
Aspect 6: The separator (17) for secondary batteries according to any one of the preceding aspects, further comprising: a heat-resistant layer (178) laminated to a preset heat-resistant thickness on at least one other area of one surface or both surfaces of the porous substrate layer (179).
Aspect 7: The separator (17) for secondary batteries according to aspect 6, wherein the heat-resistant layer (178) is laminated between the fusion layer (177) and the porous substrate layer (179) in an area region where the heat-resistant layer (178) and the fusion layer (177) overlap.
Aspect 8: The separator (17) for secondary batteries according to aspect 6 or 7, wherein the heat-resistant layer (178) includes 60% to 99% by weight of inorganic particles and 40% to 1% by weight of a polymer binder based on 100% by weight of a total composition.
Aspect 9: The separator (17) for secondary batteries according to any one of aspects 6 to 8, wherein the size of the inorganic particles is larger than or equal to 0.1 µm and smaller than or equal to 2.0 µm.
Aspect 10: An electrode assembly (10) comprising:
   a first electrode (11);
   a second electrode (15) alternately laminated with the first electrode (11) along a preset laminating direction and having a different electrical polarity from the first electrode (11); and
   a separator (17) positioned between the first electrode (11) and the second electrode (15) along the laminating direction and at the outermost sides of the first electrode (11) and the second electrode (15) and including a first part (171), which overlaps the first electrode (11) or the second electrode (15) along the laminating direction, and a second part (172), which is formed on both sides of the first part (171), wherein the second part (172) includes a fusion layer (177) including polymer particles having a glass transition temperature higher than or equal to 30 °C and lower than or equal to 90 °C, and at least a part of the second part (172) is joined to each other by heating the fusion layer (177).
Aspect 11: The electrode assembly (10) according to aspect 10, wherein the size of the polymer particles is larger than or equal to 0.1 µm and smaller than or equal to 0.7 µm.
Aspect 12: The electrode assembly (10) according to aspect 10 or 11, wherein the polymer particles are any one or a combination of acrylate and a copolymer of the acrylate.
Aspect 13: The electrode assembly (10) according to any one of aspects 10 to 12, wherein the fusion thickness, which is a thickness to which the fusion layer (177) is laminated, is less than or equal to 1 µm.
Aspect 14: The electrode assembly (10) according to any one of aspects 10 to 13, wherein the first part (171) is provided in a plural number, and the plurality of first parts (171) are positioned to be spaced apart from each other.
Aspect 15: The electrode assembly (10) according to any one of aspects 10 to 14, wherein the first part (171) and the second part (172) include a porous substrate layer (179); and a heat-resistant layer (178) laminated on one surface or both surfaces of the porous substrate layer (179) to a preset heat-resistant thickness.

The present disclosure may be modified and implemented in various forms, and its scope is not limited to the embodiments described above. Therefore, if a modified embodiment includes components of the present disclosure, it should be regarded as falling within the scope of the rights of the present disclosure.

## Claims

1. A separator (17) for secondary batteries, the separator (17) comprising:
a porous substrate layer (179); and
a fusion layer (177) laminated to a preset fusion thickness on at least one area of one or both surfaces of the porous substrate layer (179) and including polymer particles having a glass transition temperature higher than or equal to 30 °C or lower than or equal to 90 °C.

2. The separator (17) for secondary batteries according to claim 1, wherein the size of the polymer particles is larger than or equal to 0.1 µm and smaller than or equal to 0.7 µm.

3. The separator (17) for secondary batteries according to claim 1 or 2, wherein the polymer particles are any one or a combination of acrylate and a copolymer of the acrylate.

4. The separator (17) for secondary batteries according to any one of the preceding claims, wherein the fusion thickness is less than or equal to 1 µm.

5. The separator (17) for secondary batteries according to any one of the preceding claims, wherein the shape of the polymer particles is amorphous.

6. The separator (17) for secondary batteries according to any one of the preceding claims, further comprising: a heat-resistant layer (178) laminated to a preset heat-resistant thickness on at least one other area of one surface or both surfaces of the porous substrate layer (179).

7. The separator (17) for secondary batteries according to claim 6, wherein the heat-resistant layer (178) is laminated between the fusion layer (177) and the porous substrate layer (179) in an area region where the heat-resistant layer (178) and the fusion layer (177) overlap.

8. The separator (17) for secondary batteries according to claim 6 or 7, wherein the heat-resistant layer (178) includes 60% to 99% by weight of inorganic particles and 40% to 1% by weight of a polymer binder based on 100% by weight of a total composition.

9. The separator (17) for secondary batteries according to any one of claims 6 to 8, wherein the size of the inorganic particles is larger than or equal to 0.1 µm and smaller than or equal to 2.0 µm.

10. An electrode assembly (10) comprising:
a first electrode (11);
a second electrode (15) alternately laminated with the first electrode (11) along a preset laminating direction and having a different electrical polarity from the first electrode (11); and
a separator (17) positioned between the first electrode (11) and the second electrode (15) along the laminating direction and at the outermost sides of the first electrode (11) and the second electrode (15) and including a first part (171), which overlaps the first electrode (11) or the second electrode (15) along the laminating direction, and a second part (172), which is formed on both sides of the first part (171),
wherein the second part (172) includes a fusion layer (177) including polymer particles having a glass transition temperature higher than or equal to 30 °C and lower than or equal to 90 °C, and at least a part of the second part (172) is joined to each other by heating the fusion layer (177).

11. The electrode assembly (10) according to claim 10, wherein the size of the polymer particles is larger than or equal to 0.1 µm and smaller than or equal to 0.7 µm.

12. The electrode assembly (10) according to claim 10 or 11, wherein the polymer particles are any one or a combination of acrylate and a copolymer of the acrylate.

13. The electrode assembly (10) according to any one of claims 10 to 12, wherein the fusion thickness, which is a thickness to which the fusion layer (177) is laminated, is less than or equal to 1 µm.

14. The electrode assembly (10) according to any one of claims 10 to 13, wherein the first part (171) is provided in a plural number, and the plurality of first parts (171) are positioned to be spaced apart from each other.

15. The electrode assembly (10) according to any one of claims 10 to 14, wherein the first part (171) and the second part (172) include a porous substrate layer (179); and a heat-resistant layer (178) laminated on one surface or both surfaces of the porous substrate layer (179) to a preset heat-resistant thickness.
